# EUROPÄISCHE PATENTANMELDUNG

(11) **EP 2 269 793 A1**
(43) Veröffentlichungstag der Anmeldung: **05.01.2011**
(21) Anmeldenummer: 10166040.5
(22) Anmeldetag: 15.06.2010
(51) Int. Cl.: B29C 33/02, B29C 33/56, C03B 11/08, C03B 11/12

(54) **Formwerkzeug und Verfahren zu seiner Verwendung**

(30) Priorität: 30.06.2009 DE 102009027341
(71) Anmelder: Fraunhofer-Gesellschaft zur Förderung der Angewandten Forschung e.V., 80686 München (DE)
(72) Erfinder: Denter, Jörn, 79098 Freiburg (DE); Hagen, Jan, 79106 Freiburg (DE); Burmeister, Frank, 79194 Gundelfingen (DE); Fromm, Alexander, 79102 Freiburg (DE)
(74) Vertreter: Goeden, Christian

(57) **Zusammenfassung**

Die Erfindung betrifft ein Formwerkzeug (10), welches zumindest einen Grundkörper (11) aus einem ersten Material enthält, wobei zumindest eine Teilfläche des Grundkörpers (11) mit zumindest einer ersten Beschichtung (22) versehen ist, welche ein zweites Material enthält und das Formwerkzeug (10) weiterhin zumindest ein Kontaktelement (30) enthält, welches zumindest mit einer Teilfläche der Beschichtung (22) verbunden ist, so dass die Beschichtung (22) über das Kontaktelement (30) mit einer elektrischen Stromquelle verbindbar ist. Weiterhin betrifft die Erfindung ein Verfahren zur Herstellung eines Formlings, bei welchem ein solches Formwerkzeug verwendet wird, wobei die erste Beschichtung mittels einer Widerstandsheizung auf eine vorgebbare erste Temperatur erwärmt wird, wenn das Rohmaterial des Formlings mit einer zweiten Temperatur in die Kavität eingebracht wird, wobei das Rohmaterial dort nach Abschalten der Widerstandsheizung auf eine dritte Temperatur abkühlt.

## Beschreibung

Die Erfindung betrifft ein Formwerkzeug, welches zumindest einen Grundkörper aus einem ersten Material enthält, wobei zumindest eine Teilfläche des Grundkörpers mit zumindest einer ersten Beschichtung versehen ist, welche ein zweites Material enthält. Weiterhin betrifft die Erfindung ein Verfahren zur Herstellung eines Formlings unter Verwendung eines solchen Formwerkzeugs. Formwerkzeuge der eingangs genannten Art werden zur Formgebung von Artikeln aus Glas oder Kunststoff verwendet, beispielsweise beim Spritzgießen oder Heißprägen.

Aus der DE 103 59 321 A1 ist ein Formwerkzeug der eingangs genannten Art bekannt. Gemäß diesem Stand der Technik soll ein bei erhöhter Temperatur verflüssigtes bzw. erweichtes Rohmaterial in die Kavität des zuvor temperierten Formwerkzeuges unter Druck eingebracht und nachfolgend abgekühlt werden, so dass ein verfestigtes Spritzgussteil aus dem Formwerkzeug entnommen werden kann. Zur Beeinflussung der Oberflächeneigenschaften des Spritzgussteiles kann das Formwerkzeug eine Beschichtung aus einem Material mit geringer Wärmeeindringfähigkeit aufweisen. Beispielsweise kann die Beschichtung aus Titannitrid, Titancarbonitrid, Chromnitrid oder Titanaluminiumnitrid gebildet sein.

Nachteilig an diesem Stand der Technik ist jedoch, dass durch den Kontakt des flüssigen Werkstoffes mit der kälteren Wand des Formwerkzeugs der Werkstoff bereits beim Einspritzen in den Randbereichen erstarrt. Insbesondere bei dünnwandigen Querschnitten kann daher das Formwerkzeug unter Umständen nur unvollständig gefüllt werden, was zu einem erhöhten Ausschuss und/oder einer unzureichenden Abformqualität bei der Produktion von solchen Spritzgussteilen führt.

Zur Lösung dieses Problems schlägt die DE 43 08 008 A1 vor, das Formwerkzeug vor dem Einfüllen des Rohmaterials lokal zu erwärmen, beispielsweise durch einen Infrarotstrahler, einen Laserstrahl oder bei Formwerkzeugen aus einem elektrisch leitfähigen Material durch die Induktion von Wirbelströmen.

Dieses Verfahren hat jedoch den Nachteil, dass die notwendige Wärme vor dem Einfüllen des Rohmaterials eingebracht werden muss, da während des Einfüllens das Formwerkzeug geschlossen und damit für weitere Wärmezufuhr unzugänglich ist. Dadurch wird eine präzise Temperaturkontrolle unmöglich. Da die Wärme stets in die gesamte Masse des Formwerkzeugs eingebracht wird, ist ein schnelles Aufheizen bzw. rasches Abkühlen des Formwerkzeugs nicht möglich. Dadurch wird die Zykluszeit eines Spritzgießprozesses verlängert und die Oberflächenqualität des entstehenden Spritzgussteiles verschlechtert.

Ausgehend von diesem Stand der Technik liegt der Erfindung somit die Aufgabe zugrunde, ein Verfahren und eine Vorrichtung bereitzustellen, welche kürzere Zykluszeiten und/oder eine verbesserte Qualität bei der Herstellung von Formlingen aus Glas oder Kunststoff und damit Energieeinsparung ermöglicht.

Die Aufgabe wird erfindungsgemäß durch ein Formwerkzeug mit den Merkmalen des Anspruchs 1, sowie ein Verfahren zur Herstellung eines Formlings mit den Merkmalen des Anspruchs 18 gelöst.

Das erfindungsgemäße Formwerkzeug weist eine an sich bekannte Grundform auf. Demnach enthält das Formwerkzeug einen Grundkörper aus zumindest einem ersten Material. Im Grundkörper kann zumindest eine Kavität eingebracht sein, welche zur Aufnahme des beim Formprozess entstehenden Formlings dient. Die Form der Kavität ist dabei komplementär zur Form des mit dem Formwerkzeug herzustellenden Formlings. Die Kavität kann zumindest einen geschlossenen Hohlraum im Inneren des Formwerkzeugs bilden, welcher durch eine zugeordnete Öffnung befüllt und entleert wird. Alternativ kann die Kavität auch durch eine Vertiefung im Grundkörper gebildet sein, welche durch zumindest temporäres Zusammenfügen mehrerer Formwerkzeugteile verschließbar ist. Das verschließende Formwerkzeugteil kann ebenfalls eine Vertiefung, eine plane Oberfläche oder eine Erhebung aufweisen. Für die Zwecke der vorliegenden Erfindung wird bereits ein Teil eines mehrteiligen Formwerkzeuges als "Formwerkzeug" im Sinne des Anspruch 1 bezeichnet.

Daneben kann der Grundkörper weitere Merkmale aufweisen, beispielsweise Kanäle für den Durchfluss eines Wärmeträgermediums oder Aufnahmevorrichtungen für Heiz- und/oder Kühlelemente. Weiterhin kann das Formwerkzeug Befestigungsmittel enthalten, mit welchen das Formwerkzeug in einer Werkzeugmaschine, beispielsweise einer Presse, eingesetzt werden kann oder Verschlusselemente zum Zusammenfügen mehrere Teile des Formwerkzeuges. Darüber hinaus können weitere Öffnungen zur Entlüftung der Kavität oder Angussvorrichtungen vorhanden sein.

Zumindest eine Teilfläche der dem Innenraum der Kavität zugewandten Oberfläche des Grundkörpers ist erfindungsgemäß mit zumindest einer ersten Beschichtung versehen, welche ein zweites Material enthält. Zwischen der ersten Beschichtung und zumindest einem Kontaktelement ist eine elektrisch leitfähige Verbindung vorgesehen, so dass durch die erste Beschichtung über das zumindest eine Kontaktelement ein elektrischer Strom fließen kann. Hierzu wird die erste Beschichtung während der Herstellung eines Formlings zumindest zeitweise mit einer elektrischen Stromquelle verbunden. Die elektrische Stromquelle kann dazu eingerichtet sein, mittels einer Regeleinrichtung den durch die erste Beschichtung fließenden elektrischen Strom und/oder die an der ersten Beschichtung anliegende elektrische Spannung auf einen vorgebbaren Sollwert zu regeln oder zu steuern.

Aufgrund des elektrischen Widerstandes der ersten Beschichtung wird die in der Beschichtung deponierte elektrische

Energie in Wärme gewandelt. Dadurch wird eine Widerstandsheizung der ersten Beschichtung realisiert. Die dabei in der Beschichtung deponierte Energie hängt in an sich bekannter Weise von der Stärke des fließenden Stromes und dem elektrischen Widerstand der ersten Beschichtung ab.

Aufgrund des Wärmeübergangswiderstands zwischen der ersten Beschichtung und dem Grundkörper wird die in die erste Beschichtung eingebrachte Wärme im Wesentlichen oberflächennah deponiert. Ein Aufheizen wesentlicher Teile des Grundkörpers, wie im Stand der Technik vorgeschlagen, ist nicht mehr erforderlich. Auf diese Weise kann eine Temperaturerhöhung der Oberfläche der Kavität, welche mit dem Rohmaterial des Formlings in Kontakt steht, mit einer geringen Wärmemenge erreicht werden. Diese geringe Wärmemenge kann bei gleicher Heizleistung in vergleichsweise kürzerer Zeit zugeführt werden. Zur Temperatursenkung kann diese Wärme an den kälteren Grundkörper als Wärmesenke abgegeben werden, so dass die Zykluszeit eines Formprozesses mit dem erfindungsgemäß vorgeschlagenen Formwerkzeug wunschgemäß sinkt.

In einer Weiterbildung der Erfindung enthält das zweite Material zumindest eines der Elemente Magnesium, Aluminium, Silizium, Titan, Vanadium, Chrom, Eisen, Kobalt, Nickel, Yttrium, Zirkon, Niob, Molybdän, Hafnium, Tantal, Wolfram, Lanthan, Kupfer, Ruthenium, Rhenium, Palladium, Rhodium, Osmium, Silber, Iridium, Platin und/oder Gold. Das zweite Material kann ein Metall, eine Legierung, ein Karbid, ein Nitrid oder ein Karbonitrid enthalten. Neben den genannten Elementen kann das zweite Material weitere Elemente enthalten, beispielsweise als Dotierstoff, um die elektrischen und/oder mechanischen Eigenschaften der ersten Beschichtung an vorgebbare Eigenschaften anzupassen. Daneben können weitere Elemente als unvermeidbare Verunreinigungen enthalten sein, welche beim Herstellungsprozess in das zweite Material gelangen.

In einigen Ausführungsformen der Erfindung kann das zweite Material AlMg, AlSi, TiAlN, TiN, TiC, TiCn, ZrC, ZrN, HfC, HfN, VC, VN, NbC, NbN, CrC, CrN, TaC, TaN, WC, NiCr, PtIr, Cr, Ti oder Ta enthalten. In weiteren Ausführungsformen kann die erste Beschichtung leitfähig dotierten Diamant oder diamantartigen Kohlenstoff enthalten. Die erfindungsgemäß eingesetzten Heizmaterialien zeichnen sich durch einen niedrigen spezifischen elektrischen Widerstand aus. Auf diese Weise kann die Heizenergie mit kleinen elektrischen Spannungen in die Beschichtung eingebracht werden, so dass auch bei sehr fein strukturierten Kavitäten keine unerwünschten Entladungen und Überschläge der elektrischen Spannung auftreten. In einigen Ausführungsformen der Erfindung kann die elektrische Spannung kleiner als 48 V sein. Weiterhin weisen die genannten Materialien eine hohe thermomechanische und chemische Beständigkeit gegenüber einem korrosiven oder abrasiven Angriff des Rohmaterials des Formlings auf. Weiterhin können die Materialien mit guter Haftung auf verschiedene erste Materialien aufgebracht werden, so dass ein Abplatzen der ersten Beschichtung vermieden wird. Auf diese Weise wird die Standzeit des erfindungsgemäßen Formwerkzeugs erhöht. Darüber hinaus zeigen insbesondere zweite Materialien, welche ein Edelmetall, ein Nitrid, ein Karbid oder ein Karbonitrid enthalten, eine geringe Klebeneigung zu Gläsern und Kunststoffschmelzen auf, so dass ein zuverlässiges Ausformen des erstarrten Formlings gegeben ist.

In einigen Ausführungsformen der Erfindung kann zwischen der Oberfläche des Grundkörpers und der ersten Beschichtung zumindest auf einer Teilfläche eine zweite Beschichtung angeordnet sein, welche ein drittes Material enthält, welches einen größeren spezifischen Widerstand aufweist als das zweite Material. Mittels einer solchen zweiten Beschichtung kann eine elektrische Isolierung zwischen der ersten Beschichtung und einem elektrisch leitfähigen Grundkörper des Formwerkzeugs erzielt werden. Auf diese Weise kann der elektrische Stromfluss zuverlässig auf die erste Beschichtung konzentriert werden, so dass auch die thermische Energie überwiegend in der ersten Beschichtung deponiert wird. Die zweite Beschichtung kann dabei als Teilbeschichtung ausgeführt werden, so dass an definierten Stellen ein elektrischer Kontakt zwischen der ersten Beschichtung und dem Grundkörper entsteht. Sofern der Grundkörper als zweiter Anschlusskontakt für die elektrische Stromquelle verwendet wird, kann durch die Lage der elektrischen Kontaktstellen zwischen dem Grundkörper und der ersten Beschichtung die elektrische Stromdichte innerhalb de ersten Beschichtung an eine gewünschte Verteilung angepasst werden. Auf diese Weise kann die in unterschiedlichen Flächenbereichen der ersten Beschichtung deponierte Wärme kontrolliert werden.

In einigen Ausführungsformen der Erfindung kann die zweite Beschichtung die Haftfestigkeit zwischen der ersten Beschichtung und dem Grundkörper erhöhen, so dass deren Einsatz auch bei Ausführungsformen der Erfindung möglich ist, bei welchen der Grundkörper aus einem elektrisch isolierenden Material gefertigt ist.

In einigen Ausführungsformen der Erfindung kann das dritte Material ein Halogenid, ein Karbid, ein Nitrid, ein Oxid, oder Kohlenstoff enthalten. Auf diese Weise kann eine zweite Beschichtung bereitgestellt werden, welche eine große thermische und/oder mechanische und/oder chemische Beständigkeit gegenüber dem Rohmaterial des Formlings aufweist. Sofern das dritte Material Kohlenstoff enthält, kann dieser zumindest teilweise in einer sp³-Hybridisierung gebunden sein. Weiterhin kann der Kohlenstoff eine amorphe oder eine kristalline Struktur aufweisen. Insbesondere handelt es sich bei einer Kohlenstoffschicht um eine DLC-oder Diamantschicht.

Darüber hinaus kann das dritte Material in einigen Ausführungsformen der Erfindung zumindest eines der Elemente Magnesium, Kalzium, Bor, Aluminium, Silizium, Titan, Vanadium, Chrom, Eisen, Kobalt, Yttrium, Zirkon, Niob, Molybdän, Hafnium, Tantal, Wolfram und/oder Lanthan enthalten. Fallweise können weitere, nicht genannte Elemente in der zweiten Beschichtung nachgewiesen werden, welche entweder als Dotierstoff dem Beschichtungsprozess zugefügt oder aber als unvermeidbare Verunreinigungen in die Beschichtung eingebaut wurden. In einigen Ausführungsformen der Erfindung kann das dritte Material insbesondere MgF₂, CaF₂, BN, Al₂O₃, AIN, AlF₃, Cr₂O₃, FeCl₃, CuO, Y₂O₃, ZrO₂, Nb₂O₅, MoO₃, HfO₂, Ta₂O₅, WO₃ und/oder LaF₃ enthalten.

In einer Weiterbildung der Erfindung kann auf der dem Innenraum der Kavität zugewandten Oberfläche der ersten Beschichtung zumindest auf einer Teilfläche eine dritte Beschichtung angeordnet sein, welche ein viertes Material enthält. In einigen Ausführungsformen kann das vierte Material einen größeren spezifischen Widerstand aufweisen als das zweite Material. Auf diese Weise kann die mit dem Formling in Kontakt stehende Oberfläche auf eine vergrößerte Standzeit und/oder ein verringertes Anhaften optimiert werden, ohne die elektrischen Eigenschaften der Schicht berücksichtigen zu müssen. Ebenso können die elektrischen Eigenschaften der ersten Beschichtung so optimiert werden, dass sich eine möglichst gleichmäßige und/oder eine möglichst effektive Beheizbarkeit ergibt, ohne den Verschleiß der zweiten Beschichtung durch den Kontakt mit dem Rohmaterial des Formlings berücksichtigen zu müssen. Durch das Vorsehen von zumindest einer dritten Beschichtung, welches zumindest als Teilbeschichtung ausgeführt ist, können somit die Eigenschaften des Formwerkzeugs in einfacher Weise optimiert werden. Die dritte Beschichtung kann beispielsweise ein Polymer oder Kohlenstoff enthalten. Ein Polymer kann in bestimmten Ausführungsformen der Erfindung aus einem Plasma abgeschieden werden und siliziumorganische Verbindungen und/oder flourierte Kohlenstoffverbindungen enthalten.

In einigen Ausführungsform der Erfindung kann die erste Beschichtung und/oder die zweite Beschichtung und/oder die dritte Beschichtung eine Dicke von jeweils mehr als 10 nm, insbesondere mehr als 100 nm aufweisen. Durch diese Schichtdicken können einerseits Schichten bereitgestellt werden, welche eine geringe Fehlstellendichte aufweisen und somit einem korrosiven Angriff durch das Rohmaterial des Formlings zuverlässig widerstehen können. Weiterhin kann durch diese Schichtdicken ein hinreichender Leiterquerschnitt bereitgestellt werden, um eine zuverlässige und gleichmäßige Temperaturerhöhung der Beschichtung sicherzustellen. Gleichzeitig ist die Masse der Beschichtung und damit die für eine vorgebbare Temperaturerhöhung in der Beschichtung zu deponierende Wärmemenge hinreichen klein, um einen schnellen Temperaturwechsel der Oberfläche des Formwerkzeugs sicherzustellen. Darüber hinaus ist die Schichtdicke so gewählt, dass auch kleine Kavitäten bzw. feine Oberflächenstrukturen der Kavität nicht durch die Beschichtung nivelliert werden.

Die erste Beschichtung und/oder die zweite Beschichtung und/oder die dritte Beschichtung können in einigen Ausführungsformen der Erfindung mittels eines PVD- und/oder CVD- und/oder Plasmaspritz- und/oder Sputter- und/oder Metallepitaxieverfahrens auf den Grundkörper des Formwerkzeugs aufgebracht werden. In weiteren Ausführungsformen der Erfindung sind die erste Beschichtung und/oder die zweite Beschichtung und/oder die dritte Beschichtung durch ein nasschemisches Verfahren und/oder ein außenstromloses Abscheideverfahren und/oder ein galvanisches Abscheideverfahren erhältlich. Auf diese Weise kann die gewünschte Beschichtung in einfacher Weise mit guter Qualität und geringem Aufwand auf das Formwerkzeug aufgebracht werden.

In einigen Ausführungsformen der Erfindung kann die erste Beschichtung und/oder die zweite Beschichtung und/oder die dritte Beschichtung jeweils als Schichtsystem mit einer Mehrzahl von Einzelschichten ausgeführt werden. Der Übergang zwischen zwei Einzelschichten kann dabei entweder durch abrupte oder durch kontinuierliche Änderung des Elementinventars ausgestaltet sein, so dass sich zwischen zwei Einzelschichten eine Mischzone bzw. ein gradierter Übergang von einer Einzelschicht zur darüber liegenden Einzelschicht ausbildet. Beispielsweise kann innerhalb eines Schichtsystems ein gradierter Übergang von Al₂O₃ nach TiO₂ erfolgen. In einer weiteren Ausführungsform der Erfindung kann ein gradierter Übergang von TiO₂ nach ZrO₂ vorgesehen sein.

In wiederum einer anderen Ausführungsform der Erfindung kann ein mehrlagiges Schichtsystem die Verbindungen TiAlN und TiN enthalten. Alternativ kann ein Schichtsystem vorgesehen sein, welches TiC und TiCN enthält. In wiederum einer anderen Ausführungsform der Erfindung kann ein Schichtsystem TiAlN und TiAl enthalten, wobei der Stickstoffgehalt kontinuierlich, oszillierend oder stufenförmig an definierten Grenzflächen variiert.

In einigen Ausführungsformen der Erfindung kann vorgesehen sein, dass auf der Oberfläche der dritten Beschichtung und/oder der ersten Beschichtung zumindest ein Thermoelement angeordnet ist. Ein solches Thermoelement kann als Dünnschicht-Thermoelement hergestellt sein, d.h. in Form einer Teilbeschichtung der dem Innenraum der Kavität zugewandten Oberfläche der ersten bzw. der dritten Beschichtung. Insbesondere enthalten die das Thermoelement bildenden Schichten Nickel, Chrom, Eisen, Kupfer, Ruthenium, Rhenium, Palladium, Silber, Osmium, Iridium, Platin und/oder Gold in zumindest zwei verschiedenen atomaren Zusammensetzungen bzw. Legierungen. Weiterhin kann in einigen Ausführungsformen der Erfindung vorgesehen sein, dass zumindest eine der das Thermoelement bildenden Schichten darüber hinaus Aluminium und/oder Silizium enthält. In einigen Ausführungsformen der Erfindung kann das Thermoelement zumindest zwei Schichten enthalten, welche aus Ni-NiCr, Cu-CuNi, Cu-CuNiMn, Fe-CuNi, NiCr-CuNi, PtRh-Pt enthalten. Auf diese Weise kann die Temperatur der der Kavität zugewandten Oberfläche während des Herstellungsprozesses des Formlings auch bei geschlossener Kavität überwacht und/oder geregelt werden. Auf diese Weise kann die Oberflächenbeschaffenheit des entstehenden Formlings präzise beeinflusst werden. Weiterhin kann die eingebrachte Wärmemenge und damit die Zyklusdauer minimiert werden.

In einigen Ausführungsformen der Erfindung kann das Kontaktelement zumindest eine Haftvermittlerschicht und/oder zumindest eine Lötschicht und/oder zumindest eine Oxidationsschutzschicht enthalten. Dabei kann die Haftvermittlerschicht und/oder die Lötschicht und/oder die Oxidationsschutzschicht zumindest eines der Elemente Aluminium, Silizium, Zinn, Blei, Titan, Vanadium, Chrom, Eisen, Kobalt, Nickel, Yttrium, Zirkon, Niob, Molybdän, Hafnium, Tantal, Wolfram, Lanthan, Kupfer, Ruthenium, Rhenium, Palladium, Osmium, Silber, Iridium, Platin und/oder Gold enthalten. Auf diese Weise werden Kontaktelemente erhalten, welche einerseits einen geringen Übergangswiderstand zwischen den Stromzuführungen und der ersten Beschichtung sicherstellen, andererseits jedoch eine rasche Alterung des Kontaktelements während des Einsatzes des Formwerkzeugs verhindern.

Nachfolgend soll die Erfindung anhand von Figuren und Ausführungsbeispielen ohne Beschränkung des allgemeinen Erfindungsgedankens näher erläutert werden. Dabei zeigt
Figur 1 einen Schnitt durch ein erfindungsgemäßes Formwerkzeug.
Figur 2 illustriert den Ablauf des erfindungsgemäßen Verfahrens zur Herstellung eines Formlings.

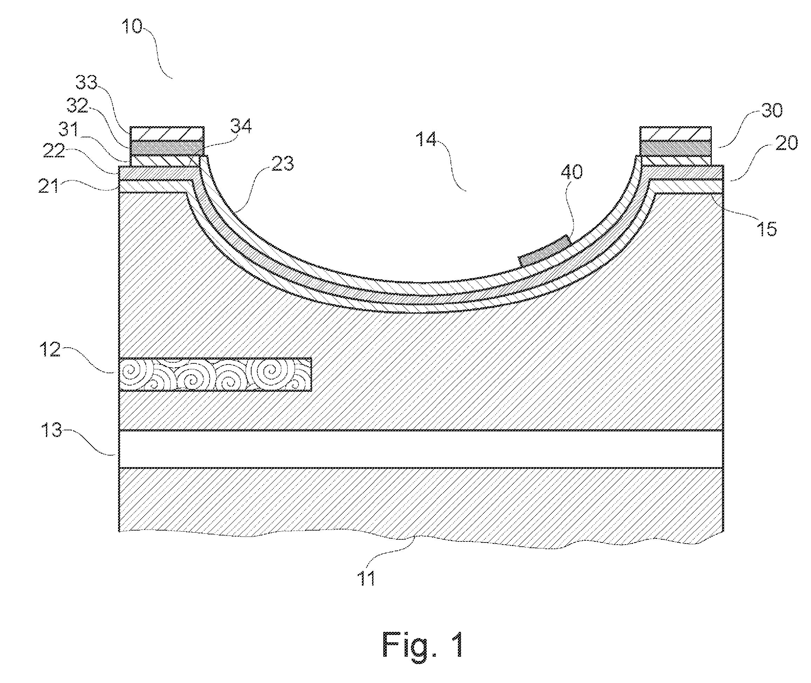

Figur 1 zeigt ein Formwerkzeug 10. Das Formwerkzeug 10 umfasst einen Grundkörper 11. Dieser bestimmt wesentlich die äußere Form und die mechanische Stabilität des Formwerkzeuges 10. Der Grundkörper 11 kann beispielsweise aus einem Metall oder einer Legierung gefertigt sein. Beispielsweise kann der Grundkörper 11 aus Edelstahl oder Werkzeugstahl gefertigt sein. In anderen Ausführungsformen der Erfindung kann der Grundkörper 11 aus Silizium, Glas oder Keramik gefertigt sein. Eine Keramik kann elektrisch leitfähig oder elektrisch isolierend ausgeführt werden. Insbesondere kann eine Keramik Si₃N₄, Al₂O₃, SiC, TiN, ZrN, AIN und/oder Metallcarbide enthalten. Daneben kann eine Keramik metallische Phasen enthalten.

In den Grundkörper 11 können Kanäle 13 eingebracht werden, welche von einem Wärmeträgermedium durchströmt werden können. Als Wärmeträgermedium eignet sich beispielsweise ein Gas wie Stickstoff, Argon oder Luft oder eine Flüssigkeit wie beispielsweise Wasser oder Öl.

Weiterhin kann der Grundkörper 11 eine Aufnahme für eine Heizpatrone 12 enthalten. Die Heizpatrone 12 kann dazu vorgesehen sein, den Grundkörper 11 auf eine vorgebbare Temperatur zu temperieren. Hierzu kann die Heizpatrone 12 einen elektrischen Heizwiderstand und/oder ein Peltier-Element enthalten. Mittels eines solchen Peltier-Elementes kann der Grundkörper 11 auch gekühlt werden.

Daneben kann der Grundkörper 11 weitere, in Figur 1 nicht dargestellte Einrichtungen aufweisen, beispielsweise kann der Grundkörper 11 einen Befestigungsflansch zur Aufnahme in einer Werkzeugmaschine aufweisen. Weiterhin kann der Grundkörper 11 von einem Ringheizkörper umgeben sein, eine Aufnahme für eine Temperaturmesseinrichtung aufweisen oder weitere, hier nicht erwähnte Einrichtungen enthalten.

Im Grundkörper 11 ist eine Kavität 14 eingebracht. Die Kavität 14 weist dabei eine Form auf, welche zur Form des im Formwerkzeug 10 herzustellenden Formlings komplementär ist. Beispielsweise kann die Kavität 14 eine optische Freiformfläche repräsentieren, wenn das Formwerkzeug 10 zur Herstellung einer optischen Linse in einem Heißprägeprozess verwendet werden soll. In anderen Ausführungsformen kann die Kavität 14 die Form eines Kunststoffspritzteils aufweisen. In diesem Fall kann das Formwerkzeug 10 mittels eines weiteren, nicht dargestellten Formwerkzeugs bis auf zumindest eine Zufuhröffnung und gegebenenfalls zumindest eine Entlüftungsöffnung geschlossen werden. Zur Herstellung des Spritzgussteils wird dann eine fließfähige Kunststoffmasse unter Druck in die Kavität 14 eingefüllt.

Um ein rasches Erstarren des Rohmaterials des Formlings beim ersten Kontakt mit der Oberfläche der Kavität 14 zu vermeiden, ist zumindest auf der Innenseite der Kavität 14 ein Schichtsystem 20 aufgebracht. Das Schichtsystem 20 enthält gemäß Figur 1 drei Einzelschichten, nämlich eine erste Beschichtung 22, eine zweite Beschichtung 21 und eine dritte Beschichtung 23. In einigen Ausführungsformen der Erfindung ist jede Einzelschicht der Beschichtung im mikroskopischen Maßstab homogen, d.h. nicht aus einzelnen Fasern oder Strängen zusammengesetzt. Dies schließt selbstverständlich nicht aus, dass auf atomarer Ebene Inhomogenitäten auftreten können, beispielsweise in Form von Präzipitaten oder Defektclustern. Meist wird der Querschnitt des Schichtsystems 20 klein sein gegenüber dem Querschnitt des Grundkörpers 11.

Die zweite Beschichtung 21 weist eine erste Seite und eine zweite Seite auf, wobei die erste Seite auf der Oberfläche des Grundkörpers angeordnet ist. Die zweite Beschichtung kann als Haftvermittlungsschicht zwischen der ersten Beschichtung 22 und der Oberfläche des Grundkörpers 11 dienen. Darüber hinaus kann die zweite Beschichtung 21 als Isolationsschicht ausgebildet sein, um einen elektrischen Stromfluss von der ersten Beschichtung 22 in den Grundkörper 11 zu verhindern. Schließlich kann die zweite Beschichtung 21 dazu vorgesehen sein, die Wärmeabfuhr bzw. den Wärmeübergangswiderstand von der ersten Beschichtung 22 in den Grundkörper 11 einzustellen. Wie bereits vorstehend beschrieben, kann die zweite Beschichtung 21 ein Halogenid, ein Karbid, ein Nitrid, ein Oxid oder Kohlenstoff enthalten. Es ist jedoch darauf hinzuweisen, dass die zweite Beschichtung 21 optional ist und in anderen Ausführungsformen der Erfindung auch entfallen kann.

Die erste Beschichtung 22 weist eine erste Seite und eine zweite Seite auf, wobei die erste Seite der ersten Beschichtung auf der zweiten Seite der zweiten Beschichtung angeordnet ist. Die erste Beschichtung ist als elektrisch leitfähige Beschichtung ausgeführt. In einigen Ausführungsformen der Erfindung kann die erste Beschichtung 22 einen spezifischen Widerstand von weniger als 1 Ohm˙cm aufweisen. Hierzu enthält die erste Beschichtung 22 beispielsweise ein Metall, eine Legierung, ein Karbid, ein Nitrid, ein Karbonitrid oder eine dotierte, amorphe oder kristalline Kohlenstoffschicht.

Um die erste Beschichtung 22 mit einer elektrischen Strom- und/oder Spannungsquelle zu verbinden, ist zumindest ein Kontaktelement 30 vorgesehen. Sofern die erste Beschichtung 22 isoliert auf einem leitfähigen Grundkörper 11 angeordnet ist oder aber der Grundkörper 11 aus einem Material mit ungenügender elektrischer Leitfähigkeit hergestellt ist, werden zumindest zwei Kontaktelemente 30 benötigt. Daneben können fallweise weitere Kontaktelemente 30 vorgesehen sein, um eine vorgebbare Verteilung der Stromdichte über die Fläche der ersten Beschichtung 22 sicher zu stellen. Ein leitfähiger Grundkörper 11 kann als Stromleiter verwendet werden und mit der ersten Beschichtung 22 an vorgebbaren Flächenbereichen in leitfähigem Kontakt stehen.

Das zumindest eine Kontaktelement 30 ist dazu vorgesehen, eine elektrische Leitung aufzunehmen, durch welche ein elektrischer Strom von einer Stromquelle an die erste Beschichtung 22 geliefert wird. Die elektrische Leitung kann mit dem Kontaktelement 30 beispielsweise durch eine Klemmverbindung, eine Schweißverbindung oder eine Lötverbindung verbunden werden. Das Kontaktelement 30 kann eine Mehrzahl von Einzelschichten enthalten. Beispielsweise kann das Kontaktelement 30 eine Haftvermittlerschicht 31 und/oder eine Lötschicht 32 und/oder eine Oxidationsschutzschicht 33 enthalten. Das Kontaktelement 30 kann an einer Teilfläche der ersten Beschichtung 22 angeordnet sein, welche außerhalb der Kavität 14 liegt. Auf diese Weise wird durch das Kontaktelement 30 der Formling innerhalb der Kavität 14 nicht beeinträchtigt. Zwischen dem Kontaktelement 30 bzw. dessen Haftvermittlerschicht 31 und der ersten Beschichtung 22 bildet sich eine Kontaktfläche 34 aus, über welche der elektrische Stromfluss erfolgen kann.

Weiterhin ist in Figur 1 eine dritte Beschichtung 23 gezeigt. Die dritte Beschichtung 23 weist eine erste Seite und eine zweite Seite auf, wobei die erste Seite der dritten Beschichtung auf der zweiten Seite der ersten Beschichtung angeordnet ist. Die dritte Beschichtung 23 ist zumindest als Teilbeschichtung der Oberfläche der ersten Beschichtung 22 ausgeführt. Die dritte Beschichtung 23 hat die Aufgabe, ein Anhaften des Formlings in der Kavität 14 vom Formwerkzeug 10 zu verhindern. Darüber hinaus kann die dritte Beschichtung 23 dazu vorgesehen sein, den Wärmeübergang zwischen dem Formling und dem Grundkörper 11 zu beeinflussen. Weiterhin kann die dritte Beschichtung 23 eine Schutzschicht für die erste Beschichtung 22 bilden, so dass die erste Beschichtung 22 vor mechanischer Beschädigung oder chemischem Angriff durch das Material des Formlings in der Kavität 14 geschützt ist.

In einigen Ausführungsformen der Erfindung kann ein optionales Thermoelement 40 vorgesehen sein, mit welchem die Temperatur der Oberfläche der dritten Beschichtung 23 bestimmbar ist. Auf diese Weise kann der Stromfluss durch die erste Beschichtung 22 so geregelt werden, dass sich an der Oberfläche der dritten Beschichtung 23 eine vorgebbare Temperatur einstellt. Auf diese Weise kann der Formprozess im Inneren der Kavität 14 mit größerer Genauigkeit kontrolliert werden.

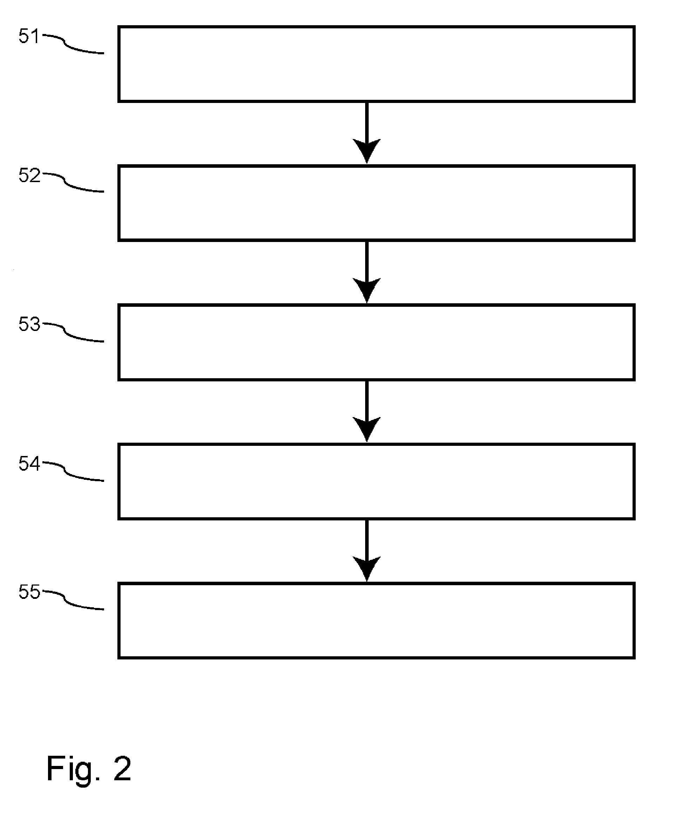

Figur 2 zeigt in einem Flussdiagramm eine Ausführungsform des erfindungsgemäß vorgeschlagenen Verfahrens zur Herstellung eines Formlings.

In einem ersten Verfahrensschritt 51 wird das Formwerkzeug 10 auf eine Temperatur T4 erwärmt bzw. gekühlt. Hierzu kann beispielsweise die Heizpatrone 12 oder ein in Figur 1 nicht dargestellter Ringheizkörper verwendet werden. In anderen Ausführungsformen der Erfindung kann im Kanal 13 ein entsprechendes Wärmeträgermedium zirkulieren.

Wenn der Grundkörper 11 des Formwerkzeugs 10 die Temperatur T4 erreicht hat, folgt im zweiten Verfahrensschritt 52 das Einschalten der Widerstandsheizung, indem ein elektrischer Strom durch die erste Beschichtung 22 geleitet wird. Dies führt zur Erwärmung des Schichtsystems 20, welches zu Beginn in etwa die Temperatur T4 angenommen hatte, auf eine höhere Temperatur T1. Fallweise kann die Temperatur T1 mit dem Thermoelement 40 überwacht und/oder geregelt werden. Aufgrund der geringen Wärmekapazität des Schichtsystems 20 kann der zweite Verfahrensschritt 52 innerhalb weniger Sekunden ausgeführt werden.

Im dritten Verfahrensschritt 53 wird das Rohmaterial des Formlings mit der Temperatur T2 in die Kavität 14 eingefüllt. Dies kann beispielsweise dadurch erfolgen, dass ein verformbarer Rohling in die Kavität 14 eingeführt wird, beispielsweise beim Heißprägen von Glas. In anderen Ausführungsformen der Erfindung kann das Einfüllen des Rohmaterials auch das Fördern eines pastösen oder flüssigen Kunststoffmaterials umfassen, welches mittels einer Pumpeinrichtung unter Druck in die Kavität 14 geleitet wird. In diesen Fällen wird meist die Temperatur T2 des Rohmaterials größer oder gleich der Temperatur T1 des Schichtsystems 20 sein, um ein sofortiges Erstarren des Rohmaterials an den Wänden der Kavität 14 zu vermeiden.

Nachdem das Rohmaterial die Kavität 14 bis zum gewünschten Füllungsgrad ausgefüllt hat, wird im vierten Verfahrensschritt 54 die Widerstandsheizung des Schichtsystems 20 ausgeschaltet oder zumindest reduziert. Dies führt dazu, dass der Formling Wärme durch das Schichtsystem 20 an den Grundkörper 11 abgeben kann. Dadurch kühlt der Formling auf eine Temperatur T3 ab. Die Temperatur T3 wird üblicherweise größer oder gleich der Temperatur T4 des Grundkörpers 11 sein. Aufgrund der geringen Masse des Schichtsystems 20 erfolgt das Abkühlen des Schichtsystems 20 und des Formlings auf die Temperatur T3 sehr rasch, da der Grundkörper 11 in diesem Fall als Wärmesenke wirkt.

Nachdem der Formling die Temperatur T3 erreicht hat, kann im fünften Verfahrensschritt 55 der Formling aus der Kavität 14 ausgeformt werden. Dabei ist die Temperatur T3 so gewählt, dass ein Anhaften des Formlings an der Oberfläche der Kavität 14 möglichst gering ausfällt, um eine Beschädigung der Oberfläche des Formlings zu vermeiden.

Es darauf hinzuweisen, dass in anderen Ausführungsformen der Erfindung der zweite Verfahrensschritt 52 und der dritte Verfahrensschritt 53 auch vertauscht sein können. In diesem Fall kann das Rohmaterial ein thermisch aushärtendes Material enthalten. Die Temperatur T2 des Rohmaterials wird im Regelfall kleiner oder gleich der Temperatur T4 des Grundkörpers sein und kleiner als die Aushärte- bzw. Umformtemperatur T_{g} sein.

Nachdem die Kavität 14 im zuerst ausgeführten dritten Verfahrensschritt bis zum gewünschten Füllungsgrad mit dem Rohmaterial gefüllt ist, wird im danach ablaufenden zweiten Verfahrensschritt durch Einschalten der Widerstandsheizung das Schichtsystem 20 von der Temperatur T4 auf die Temperatur T1 geheizt. Die Temperatur T1 liegt dabei oberhalb der Aushärte- bzw. Umformtemperatur T_{g} des Rohmaterials. Auf diese Weise wird thermische Energie von der Oberfläche des Schichtsystems 20 in das Rohmaterial des Formlings eingebracht.

Nach dem Aushärten des Rohmaterials laufen die Verfahrensschritte 54 und 55 ab, wie vorstehend beschrieben.

### Ausführungsbeispiel 1

Im ersten Ausführungsbeispiel wird die Herstellung einer konvexen optischen Linse aus einem Glas mit der Glasübergangstemperatur T_{g} beschrieben. Hierzu wird ein Formwerkzeug 10 verwendet, welches einen Grundkörper 11 aus Wolframkarbid enthält. In dem Grundkörper 11 wird eine Kavität 14 eingebracht, welche eine zur Form der konvexen optischen Linse komplementäre Form aufweist.

In den Innenraum der Kavität wird mittels eines reaktiven Sputterverfahrens eine zweite Beschichtung 21 aufgebracht, welche AIN enthält. Auf die zweite Beschichtung 21 wird eine erste Beschichtung 22 aufgebracht. Die erste Beschichtung 22 enthält dabei eine Mehrzahl von Einzelschichten, welche abwechselnd übereinander bis zur gewünschten Gesamtschichtdicke aufgebracht werden. Dabei enthält eine Einzelschicht TiN und die andere Einzelschicht TiAlN. Auf diese Weise ergibt sich eine erste Beschichtung 22, welche eine vorgebbare elektrische Leitfähigkeit aufweist. Sowohl die erste Beschichtung 22 als auch die zweite Beschichtung 21 sind über den Rand der Kavität 14 hinaus auf die Stirnfläche 15 des Formwerkzeugs 10 aufgebracht. Auf zwei Flächenbereiche außerhalb der Kavität 14 werden zwei Kontaktelemente 30 auf die erste Beschichtung 22 aufgebracht. Die Kontaktelemente 30 enthalten dabei eine Haftvermittlerschicht 31, welche unmittelbar auf der ersten Beschichtung 22 aufliegt und im Wesentlichen Titan enthält. Auf die Haftvermittlerschicht 31 wird eine Lötschicht 32 aufgebracht, welche im Wesentlichen Nickel enthält. Auf die Lötschicht 32 wird eine Oxidationsschutzschicht 33 aufgebracht, welche im Wesentlichen eine Legierung aus Platin und Gold enthält.

Auf die Kontaktelemente 30 werden Anschlussleitungen aus Edelstahl mittels eines AgCuTi-Hartlots gefügt.

Im Betrieb des Formwerkzeugs wird der Grundkörper 11 mittels eines ringförmigen Heizelements auf eine Temperatur T4 beheizt, welche etwa 50 bis etwa 150 Kelvin niedriger ist als T_{g}. Nach Einlegen des Rohmaterials des Formlings, welches eine Temperatur T2 unterhalb von T_{g} aufweist, wird durch Anlegen einer Gleichspannung an die erste Beschichtung 22 das Rohmaterial innerhalb weniger Sekunden auf eine Temperatur erwärmt, welche etwa 50 Kelvin über der Glasübergangstemperatur T_{g} des Rohmaterials liegt. Die Umformung des Rohmaterials kann durch Aufbringen eines Pressdrucks auf das Rohmaterial in der Kavität 14 unterstützt werden.

Nach Beendigung des Umformvorgangs wird die Stromzufuhr zur ersten Beschichtung 22 unterbrochen, wodurch der umgeformte Formling innerhalb weniger Sekunden auf eine Temperatur T3 unterhalb der Glasübergangstemperatur T_{g} abkühlt. Danach kann der Formling ohne Anhaften an der Oberfläche der dritten Beschichtung 23 aus der Kavität 14 des Formwerkzeugs 10 entnommen werden.

### Ausführungsbeispiel 2

Im zweiten Ausführungsbeispiel wird ein Formwerkzeug 10 verwendet, welches einen Grundkörper 11 aus Edelstahl aufweist. Im Grundkörper 11 wird eine Kavität 14 ausgeformt, welche komplementär zur Form des herzustellenden Formlings ausgebildet ist.

Mittels eines reaktiven Sputterprozesses wird die Stirnfläche 15 und die Kavität 14 des Formwerkzeuges 10 mit einer zweiten Beschichtung 21 versehen. Die zweite Beschichtung 21 enthält dabei ein mehrlagiges isolierendes Schichtsystem, wobei die Einzelschichten des Schichtsystems TiO₂ und ZrO₂ enthalten.

Auf die so erhaltene zweite Beschichtung 21 wird die erste Beschichtung 22 als elektrisch leitfähige Schicht aufgebracht. Die erste Beschichtung 22 enthält an der Kontaktfläche zur zweiten Beschichtung 21 CrN, welches mittels eines gradierten Übergangs mit abnehmendem Stickstoffgehalt in eine reine Cr-Schicht übergeht.

Im Randbereich des Formwerkzeugs 10, d.h. außerhalb der Kavität 14, sind wiederum zwei Kontaktelemente 30 aufgebracht. Die Kontaktelemente 30 enthalten eine Haftvermittlerschicht 31, welche im Wesentlichen Chrom enthält. Auf die Haftvermittlerschicht 31 ist eine Lötschicht 32 aufgebracht, welche im Wesentlichen Kupfer enthält. Auf die Lötschicht 32 ist eine Oxidationsschutzschicht aufgebracht, welche im Wesentlichen Silber enthält.

Im Innenraum der Kavität 14 wird die erste Beschichtung 22 mit einer isolierenden dritten Beschichtung 23 versehen. Die Beschichtung 23 ist durch Plasmapolymerisation von Hexamethyldisiloxan erhältlich. Um die Temperatur im Inneren der Kavität 14 zu überwachen und/oder zu regeln, wird auf die Beschichtung 23 ein Thermoelement 40 aufgebracht. Das Thermoelement 40 enthält zwei strukturierte Leiterbahnen, welche durch einen Sputterprozess hergestellt wurden. Im Mittenbereich und im Randbereich außerhalb der Werkzeugkavität überschneiden sich die beiden Leiterbahnen, von welchen eine im Wesentlichen aus Nickel besteht. Die zweite Leiterbahn besteht im Wesentlichen aus einer Legierung, welche etwa 90% Nickel und 10% Chrom enthält. Die Leiterbahnen sind in an sich bekannter Weise mit einem Messgerät verbindbar, welches die entstehende Thermospannung bestimmt und die Temperatur bestimmt.

Zur Beheizung des Schichtsystems 20, welches aus der zweiten Beschichtung 21, der ersten Beschichtung 22 und der dritten Beschichtung 23 besteht, werden die Kontaktelemente 30 mittels Leitungen aus Edelstahl verbunden. Die Verbindung zwischen den Leitungen und den Kontaktelementen 30 erfolgt durch Hartlöten.

Im Betrieb des Formwerkzeugs 10 wird der Grundkörper 11 auf eine Temperatur von etwa 90°C beheizt. Dies geschieht durch Einleiten von Öl oder Wasser als Wärmeträger in die Kanäle 13 des Grundkörpers 11. Vor dem Einbringen des Rohmaterials des Formlings wird die erste Beschichtung 22 über eine Spannungsquelle mit einem elektrischen Strom beaufschlagt und dadurch resistiv beheizt. Hierdurch wird die Oberfläche der dritten Beschichtung 23 im Inneren der Kavität 14 innerhalb weniger Sekunden auf 110°C erwärmt. Nachfolgend wird das Rohmaterial des Formlings, welches im Wesentlichen Polymethylmethacrylat enthält, in die Kavität 14 eingebracht. Aufgrund der hohen Temperatur der die Kavität begrenzenden Wände kommt es dabei nicht zum sofortigen Erstarren des Rohmaterials. Nach Beendigung des Einfüllvorgangs wird die Stromzufuhr zur ersten Beschichtung 22 unterbrochen oder zumindest reduziert. Der Formling in der Kavität 14 kann nun seine thermische Energie an den Grundkörper 11 abgeben und kühlt innerhalb weniger Sekunden auf eine Temperatur von weniger als 95°C ab. Anschließend kann das Formwerkzeug geöffnet und der Formling aus der Kavität 14 entnommen werden.

### Ausführungsbeispiel 3

Im dritten Ausführungsbeispiel wird ein Formwerkzeug 10 mit einem Grundkörper 11 aus Edelstahl zur Herstellung eines Formlings aus einer reaktiv härtenden Polyurethanmasse verwendet. Der Grundkörper 11 enthält wiederum eine Kavität 14, welche komplementär zur Form des Formlings ausgeformt ist. Zumindest der Innenraum der Kavität 14 wird mittels eines Sputterprozesses mit einer isolierenden zweiten Beschichtung 21 versehen, welche im Wesentlichen Al₂O₃ enthält. Hierauf wird als erste Beschichtung 22 ein Schichtsystem abgeschieden, welches TiC enthält.

Im Randbereich des Formwerkzeugs 10, d.h. außerhalb der Kavität 14, werden wiederum zumindest zwei Kontaktelemente 30 aufgebracht. Die Kontaktelemente 30 umfassen eine Haftvermittlerschicht 31, welche im Wesentlichen Titan enthält und in unmittelbarem Kontakt zur ersten Beschichtung 22 steht. Auf die Oberfläche der Haftvermittlerschicht 31 wird eine Lötschicht 32 aufgebracht, welche im Wesentlichen aus Kupfer besteht. Auf die Lötschicht 32 wird Silber als Oxidationsschutzschicht aufgebracht. Über die Kontaktelemente 30 kann eine Lötverbindung von Anschlussleitungen zur ersten Beschichtung 22 hergestellt werden, welche die Beheizung der ersten Beschichtung 22 durch direkten Stromfluss erlaubt.

Durch Kanäle 13 wird der Grundkörper 11 des Formwerkzeugs 10 mittels eines Wärmeträgermediums auf eine Temperatur T4 von etwa 50°C temperiert. Sodann werden reaktiv aushärtende Komponenten in die Kavität 14 eingebracht, welche eine Temperatur T2 aufweisen, welche in etwa der Temperatur T4 entspricht.

Nachdem die Kavität 14 mit dem gewünschten Mischungsverhältnis und dem gewünschten Füllungsgrad der reaktiv aushärtenden Komponenten gefüllt ist, wird die erste Beschichtung 22 durch direkten Stromfluss beheizt. Hierdurch wird die Oberfläche der Kavität 14 innerhalb einiger Sekunden auf eine Temperatur T1 erwärmt, welche in etwa 80°C beträgt. Die Temperatur T1 ist hinreichend, um die Polyurethanmasse in der Kavität 14 aushärten zu lassen.

Nach Beendigung des Aushärtens wird die Beheizung mittels der ersten Beschichtung 22 unterbrochen. Der Formling gibt seine Wärme an den Grundkörper 11 ab, welcher in diesem Verfahrensschritt als Wärmesenke fungiert. Dadurch dauert der Abkühlvorgang nur wenige Sekunden. Nachdem der Formling eine Temperatur T3 angenommen hat, welche in etwa der Temperatur T4 des Grundkörpers 11 entspricht, kann das Formwerkzeug 10 geöffnet und der Formling entnommen werden.

Die vorstehende Beschreibung ist nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche "erste" und "zweite" Merkmale definieren, so dient diese Bezeichnung der Unterscheidung gleichartiger Merkmale, ohne eine Rangfolge festzulegen.

## Patentansprüche

1. Formwerkzeug (10), welches zumindest einen Grundkörper (11) aus einem ersten Material enthält, wobei zumindest eine Teilfläche des Grundkörpers (11) mit zumindest einer ersten Beschichtung (22) versehen ist, welche ein zweites Material enthält, **dadurch gekennzeichnet, dass** das Formwerkzeug (10) weiterhin zumindest ein Kontaktelement(30) enthält, welches zumindest mit einer Teilfläche der Beschichtung (22) verbunden ist, so dass die Beschichtung (22) über das Kontaktelement(30) mit einer elektrischen Stromquelle verbindbar ist.

2. Formwerkzeug nach Anspruch 1, **dadurch gekennzeichnet, dass** das erste Material ausgewählt ist aus Edelstahl, Silizium, Glas oder Keramik.

3. Formwerkzeug nach Anspruch 1 oder 2, **dadurch gekennzeichnet, dass** der Grundkörper (11) zumindest eine Kavität (14) enthält

4. Formwerkzeug nach einem der Ansprüche 1 bis 3, **dadurch gekennzeichnet, dass** das zweite Material ausgewählt ist aus einem Metall, einer Legierung, einem Carbid, einem Nitrid, einem Karbonitrid oder Kohlenstoff.

5. Formwerkzeug nach Anspruch 4, **dadurch gekennzeichnet, dass** das zweite Material zumindest eines der Elemente Mg, Al, Si, Ti, V, Cr, Fe, Co, Ni, Y, Zr, Nb, Mo, Hf, Ta, W, La, Cu, Ru, Rh, Pd, Re, Os, Ag, Ir, Pt und/oder Au enthält.

6. Formwerkzeug nach einem der Ansprüche 1 bis 5, **dadurch gekennzeichnet, dass** die erste Beschichtung (22) einen spezifischen Widerstand von weniger als 1 Ohm˙cm aufweist.

7. Formwerkzeug nach einem der Ansprüche 1 bis 6, **dadurch gekennzeichnet, dass** zwischen der Oberfläche des Grundkörpers (11) und der ersten Beschichtung (22) zumindest auf einer Teilfläche eine zweite Beschichtung (21) angeordnet ist, welche ein drittes Material enthält, welches einen größeren spezifischen Widerstand aufweist als das zweite Material.

8. Formwerkzeug nach Anspruch 7, **dadurch gekennzeichnet, dass** das dritte Material ausgewählt ist aus einem Halogenid, einem Carbid, einem Nitrid, einem Oxid oder Kohlenstoff.

9. Formwerkzeug nach Anspruch 8, **dadurch gekennzeichnet, dass** das dritte Material zumindest eines der Elemente Mg, Ca, B, A1, Si, Ti, V, Cr, Fe, Co, Y, Zr, Nb, Mo, Hf, Ta, W und/oder La enthält.

10. Formwerkzeug einem der Ansprüche 1 bis 9, **dadurch gekennzeichnet, dass** auf der Oberfläche der ersten Beschichtung (22) zumindest auf einer Teilfläche eine dritte Beschichtung (23) angeordnet ist, welche ein viertes Material enthält, welches einen größeren spezifischen Widerstand aufweist als das zweite Material.

11. Formwerkzeug nach Anspruch 10, **dadurch gekennzeichnet, dass** auf der Oberfläche der dritten Beschichtung (23) und/oder der ersten Beschichtung (22) zumindest ein Thermoelement (40) angeordnet ist.

12. Formwerkzeug nach einem der Ansprüche 1 bis 11, **dadurch gekennzeichnet, dass** die erste Beschichtung (22) und/oder die zweite Beschichtung (21) und/oder die dritte Beschichtung (23) eine Dicke von jeweils mehr als 10 nm, insbesondere mehr als 100 nm aufweisen.

13. Formwerkzeug nach einem der Ansprüche 1 bis 12, **dadurch gekennzeichnet, dass** die erste Beschichtung (22) und/oder die zweite Beschichtung (21) und/oder die dritte Beschichtung (23) jeweils als Schichtsystem mit einer Mehrzahl von Einzelschichten ausgeführt sind.

14. Formwerkzeug nach einem der Ansprüche 1 bis 13, **dadurch gekennzeichnet, dass** das Kontaktelement(30) zumindest eine Haftvermittlerschicht (31) und/oder zumindest eine Lötschicht (32) und/oder zumindest eine Oxidationsschutzschicht (33) enthält.

15. Formwerkzeug nach Anspruch 14, **dadurch gekennzeichnet, dass** die Haftvermittlerschicht (31) und/oder die Lötschicht (32) und/oder die Oxidationsschutzschicht (33) zumindest eines der Elemente Al, Si, Sn, Pb, Ti, V, Cr, Fe, Co, Ni, Y, Zr, Nb, Mo, Hf, Ta, W, La, Cu, Ru, Rh, Pd, Re, Os, Ag, Ir, Pt und/oder Au enthält.

16. Verwendung eines Formwerkzeuges nach einem der Ansprüche 1 bis 15 zur Formgebung eines Artikels aus Glas, insbesondere aus Chalkogenidglas oder optischem Glas.

17. Verwendung eines Formwerkzeuges nach einem der Ansprüche 1 bis 15 zur Formgebung eines Artikels aus zumindest einem Thermoplast, Duroplast oder Elastomer.

18. Verfahren zur Herstellung eines Formlings, bei welchem ein Formwerkzeug (10) verwendet wird, welches einen Grundkörper (11) aus einem ersten Material enthält und zumindest eine Teilfläche des Grundkörpers (11) mit zumindest einer ersten Beschichtung (22) versehen ist, welche ein zweites Material enthält, **dadurch gekennzeichnet, dass** die erste Beschichtung (22) mittels einer Widerstandsheizung auf eine vorgebbare erste Temperatur erwärmt wird, das Rohmaterial des Formlings mit einer zweiten Temperatur in Kontakt mit der ersten Beschichtung (22) gebracht wird und dort nach Abschalten der Widerstandsheizung auf eine dritte Temperatur abkühlt.

19. Verfahren nach Anspruch 18, **dadurch gekennzeichnet, dass** das Formwerkzeug (10) auf einer vierten Temperatur gehalten wird.

20. Verfahren nach einem der Ansprüche 18 oder 19, **dadurch gekennzeichnet, dass** die dritte und die vierte Temperatur niedriger sind als eine Erstarrungstemperatur des Rohmaterials des Formlings und die erste und die zweite Temperatur höher sind als die Erstarrungstemperatur des Rohmaterials des Formlings.

21. Verfahren nach einem der Ansprüche 18 bis 20, **dadurch gekennzeichnet, dass** das Abschalten der Widerstandsheizung erfolgt, nachdem die Kavität vollständig mit dem Rohmaterial des Formlings gefüllt ist.
